# EUROPEAN PATENT SPECIFICATION

(11) **EP 2 494 937 B1**
(45) Date of publication and mention of the grant of the patent: **19.08.2015**
(21) Application number: 09850814.6
(22) Date of filing: 27.10.2009
(51) Int. Cl.: A61C 1/14

(54) **THERAPEUTIC TOOL GRIPPING DEVICE FOR A HANDPIECE**
VORRICHTUNG ZUM AUFGREIFEN EINES THERAPEUTISCHEN INSTRUMENTS FÜR EIN HANDSTÜCK
DISPOSITIF DE PRÉHENSION D'OUTIL THÉRAPEUTIQUE POUR UNE PIÈCE À MAIN

(43) Date of publication of application: 05.09.2012
(73) Proprietor: Soma, Kuniji, Tochigi 322-0076 (JP)
(72) Inventor: Soma, Kuniji, Tochigi 322-0076 (JP)
(74) Representative: Hoffmann Eitle
(86) International application number: PCT/JP2009/068388
(87) International publication number: WO 2011/052034

(56) References cited:
- EP-A2- 0 876 800
- WO-A1-98/17427
- JP-A- 11 047 156
- JP-A- 51 076 896
- JP-A- 57 128 147
- JP-Y- 37 026 098
- US-A- 610 483
- US-A- 3 967 831
- US-A- 4 012 841

## Description

### Technical Field

The present invention relates to a structure of a device for gripping a treatment tool of a handpiece used for medical or dental services.

### Background Art

Various types of handpieces are used for medical or dental services, which, for example, rotate a treatment tool at high speed, reciprocate or vibrate the treatment tool depending on treatment purposes, treatment areas, or treatment methods. Also, various types of treatment tools are used. Such a treatment tool is removably attached by a gripping device (chuck) of a handpiece and can be easily changed. Thus, a chuck structure for gripping a treatment tool of a medical/dental handpiece requires performance of firmly gripping the treatment tool under any conditions, durability, and reliability. Also, a head portion of the handpiece needs to be as small as possible so as to facilitate treatment operation. Further, as performance essential to a medical/dental handpiece, chemical resistance, autoclave resistance, and corrosion resistance are considered.

In this respect, for example, JP-A-60-90609 suggests a chuck structure of a handpiece for gripping a treatment tool using a twisting member in the form of a coil spring. Specifically, the chuck structure includes a twisting member in the form of a coil spring. The twisting member is twisted in a direction opposite to a winding direction to increase an inner diameter of the twisting member to allow attachment of the treatment tool, and the treatment tool is gripped using a restoring force of the twisting member. With such a chuck structure of a handpiece, the treatment tool can be effectively firmly gripped by the coil spring of a small volume. However, vibration caused by the treatment tool during treatment may be transferred to the coil spring, thereby producing resonance and abnormal vibration. In this case, a chuck force of the coil spring as a twisting member may be reduced to prevent accurate treatment, and further the treatment tool may be unsafely removed from the handpiece.

Patent Document 1: JP-A-60-90609
Patent Document 2: JP-A-59-51846
Patent Document 3: JP-U-61-39520

US 3,967,831 discloses a spring coil holding device utilizing an integral torsion multistage spring coil placed in an actuating sleeve and a housing sleeve, the integral spring coil being actuated by a rotational mechanism (the actuating sleeve), the rotational mechanism being operable to rotate the upper coils of the spring in a direction opposite to the direction of the winding of the coil spring, thereby releasing a rod-shaped object. The torsion spring is restored to its original condition by its own resilience for clamp holding a rod-shaped object.

WO 9817427 describes a quick-release chuck device including a body member and a device for attaching the body member to a drive spindle. A longitudinal bore or recess is defined in the body member and a resilient coiled member gripping device is disposed in the longitudinal recess 22. The coiled member defines an inner diameter bore for receipt of a tool shank inserted therein. The coiled member gripping device is a torsion spring, and a rotational mechanism (42) is provided for variably coiling the coiled member gripping device (56) within the longitudinal recess (22) thereby causing the inner diameter bore to constrict and grip upon a tool shank inserted therein.

US 610,483 discloses a dental handpiece including a drill holder having a torsion spring and means for applying a rotational force to the torsion spring to enable the spring to grip the drill.

### Brief Summary of the Invention

### Problem to be Solved by the Invention

In the conventional chuck structure described above, various vibrations caused by various treatment tools are transferred to the twisting member in the form of a coil spring during treatment by a skilled user using the treatment tools. The coil spring as the twisting member has a constant natural frequency, and thus such vibrations may resonate and be amplified. In this case, a gripping force of the twisting member may be reduced to cause the treatment tool to slip or bounce during treatment to prevent intended treatment, and the treatment tool may be unsafely removed from the handpiece. This is a common problem of chuck structures using a cylindrical elastic span that is a main device for gripping a treatment tool of a handpiece, not limited to the chuck structure using the twisting member in the form of a coil spring.

The present invention is achieved to solve the above problem, and has an object to provide a device for gripping a treatment tool of a handpiece that allows the treatment tool to be easily attached and detached to and from the handpiece, firmly grips the treatment tool, and achieves a high vibration absorbing property.

### Means for Solving the Problem

In accomplishing the above object, according to a first aspect of the present invention, there is provided a device for gripping a treatment tool of a handpiece comprising: a spindle rotatably installed; and a coil spring that is set in the spindle and rotated integrally with the spindle, the treatment tool inserted from a tip of the spindle into the coil spring being gripped by an inner diameter surface of a grip portion of the coil spring, the device wherein: the coil spring has an inconstant natural frequency, and wherein the coil spring includes the grip portion in a partial region thereof, and the grip portion has a smaller inner diamter than that of other regions, and wherein the device further comprises a compression mechanism that includes the pressing member installed between a rear end of the spindle and the coil spring, the compression mechanism being operable to press the pressing member from the rear end of the spindle to axially compress the coil spring, and wherein the inner diameter of the coil spring is increased when the coil spring is compressed.

According to a second aspect of the present invention, there is provided the device as described in the first aspect, wherein the coil spring includes the grip portion in a middle region thereof.

According to a third aspect of the present invention, there is provided the device as described in the first or second aspects, wherein the coil spring has an inconstant pitch angle.

According to a fourth aspect of the present invention, there is provided the device as described in any one of the first to third aspects,
wherein the handpiece is a medical or dental handpiece and wherein the inner diameter of the grip portion is smaller than an outer diameter of the treatment tool when the compression mechanism is not operated, and larger than the outer diameter of the treatment tool when the compression mechanism is operated.

According to a fifth aspect of the present invention, there is provided the device as described in the fourth aspect, wherein an inner diameter portion of the grip portion has a ground surface along a outer surface of the treatment tool when the compression mechanism is operated.

According to a sixth aspect of the present invention, there is provided the device as described in the fourth or fifth aspect, wherein the coil spring includes the grip portion in a partial region thereof, and the grip portion has a larger pitch angle than that of other regions.

### Effects of the Invention

In the first aspect of the present invention, the treatment tool is gripped by the coil spring having an inconstant natural frequency. Thus, according to the present invention, a situation in which the coil spring is subjected to specific vibration and resonates can be avoided, thereby achieving high vibration absorbing performance and stable gripping performance.

The grip portion of the coil spring has a smaller coil inner diameter than that of other regions. Thus, according to the present invention, the grip portion can firmly grip the treatment tool. The coil spring has different coil inner diameters depending on regions. Thus, according to the present invention, a spring constant can be effectively made nonlinear to provide an inconstant natural frequency.

In the second aspect of the present invention, the coil spring has an hourglass shape with a narrowed middle region. Thus, according to the present invention, a spring constant of the coil spring can be effectively made nonlinear to provide an inconstant natural frequency.

In the third aspect of the present invention, a coil spring having an inconstant pitch angle is used. Thus, according to the present invention, a spring constant of the coil spring can be effectively made nonlinear to provide an inconstant natural frequency.

When the coil spring is compressed, the inner diameter of the coil spring is increased. In the fourth aspect of the present invention, if the compression mechanism compresses the coil spring, the inner diameter of the grip portion temporality becomes larger than an outer diameter of the treatment tool. If the treatment tool is inserted into the coil spring in this state to release the compression, the inner diameter of the grip portion tries to become smaller than the outer diameter of the treatment tool to firmly fasten the treatment tool. Thus, according to the present invention, the treatment tool can be attached and detached with a simple configuration, and a firm gripping force can be obtained.

In the fifth aspect of the present invention, an inner diameter portion of the grip portion has a ground surface along an outer surface of the treatment tool when the compression mechanism compresses the grip portion. Thus, according to the present invention, a larger difference in inner diameter between in compression and in normal time can be obtained than in a case without the ground surface, thereby allowing the treatment tool to be more firmly gripped. The treatment tool is fastened and gripped by an edge of the ground surface, thereby providing a further gripping force. The ground surface of the coil spring is formed along the outer surface of the treatment tool with the grip portion being compressed, and thus a product error of the inner diameter of the coil spring can be accepted.

In the sixth aspect of the present invention, the grip portion has a larger pitch angle than that of other regions. Thus, according to the present invention, an amount of increase in inner diameter of the grip portion in compression of the spring can be effectively increased.

### Brief Description of Drawings

Fig. 1 is an illustration showing a section of a head portion of a medical/dental handpiece used in a first Embodiment.
Fig. 2 is a sectional view showing a push button 32 being pressed in the medical/dental handpiece used in a first Embodiment of the present invention.
Fig. 3 is an illustration showing a configuration of a coil spring 28 in a first Embodiment in detail.
Fig. 4 is an illustration showing a structure of a coil spring 28 used in a device for gripping a treatment tool of a second Embodiment.
Fig. 5 is an illustration showing an axially cut section of a part of a grip portion 281 of a coil spring 28 surrounded by a circle in Fig. 4.

### Mode for Carrying Out the Invention

Now, embodiments of the present invention will be described with reference to the drawings. In the drawings, the same components are denoted by the same reference numerals, and overlapping descriptions will be omitted. The embodiments below do not limit the invention.

### First Embodiment

### [Configuration of the first embodiment]

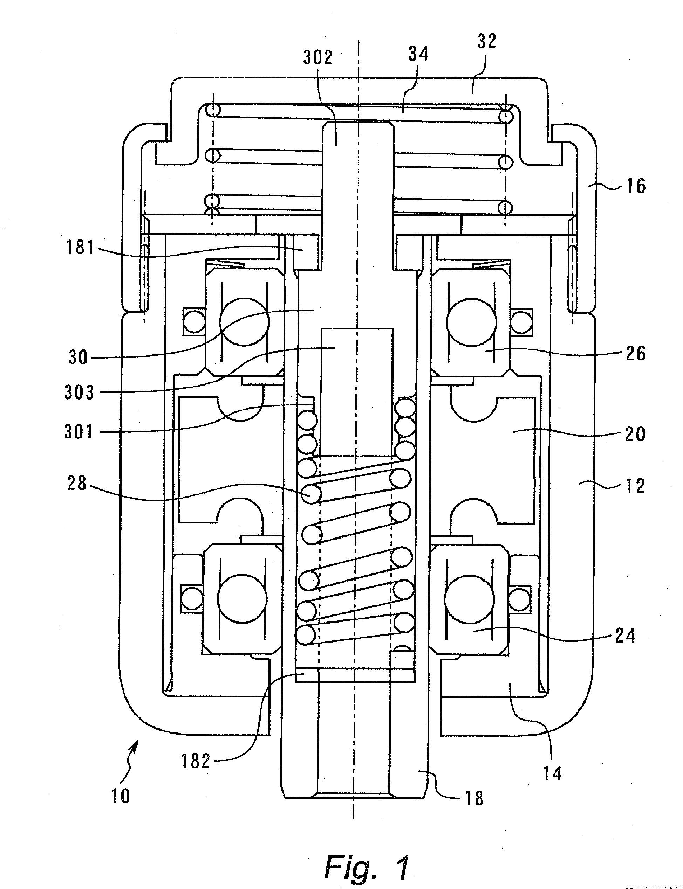

Fig. 1 shows a section of a head portion of a medical/dental handpiece used in a first embodiment. The medical/dental handpiece in the first embodiment is configured as an air turbine type handpiece that is rotationally driven by supplied compressed air. As shown in Fig. 1, a head portion 10 of the handpiece includes a head housing 12. The head housing 12 is connected to a grip portion (not shown) of the handpiece, and compressed air is introduced into the head housing 12 through the inside of the grip portion. A structure relating to introduction and discharge of compressed air is not an essential part of the present invention but is a known structure, and thus detailed descriptions thereof will be omitted.

The head housing 12 houses a cartridge 14. The cartridge 14 can be easily attached or detached by removing a head cap 16 threaded on the head housing 12. An internal configuration of the cartridge 14 will be described in detail below.

The cartridge 14 includes a spindle 18 for gripping the treatment tool. A plurality of rotary vanes 20 for rotationally driving the spindle with compressed air are provided on the middle of an outer periphery of the spindle 18. Ball bearings 24 and 26 for rotatably providing the spindle 18 in the cartridge 14 are provided in upper and lower positions of the spindle 18 with the rotary vanes 20 therebetween.

In the spindle 18, a coil spring 28 for gripping the treatment tool and a pressing member 30 for axially compressing the coil spring 28 are provided, and set in the spindle 18 in a pressed manner by a rear end set screw 181. The coil spring 28 is made of a high-strength spring material for ensuring durability, autoclave resistance, chemical resistance, corrosion resistance, and safety required for a medical/dental handpiece. The pressing member 30 includes a securing portion 301 provided at one end and secured to the coil spring 28, and a pressing portion 302 provided at the other end and protruding from the rear end set screw 181 of the spindle 18. An insertion portion 303 into which the treatment tool is inserted is formed in the pressing member 30 on the side of the securing portion 301. The coil spring 28 is installed between the pressing member 30 and a step 182 in the spindle 18 with predetermined pressure being applied to the coil spring 28. The shape of the coil spring 28 will be described later in detail.

The head cap 16 includes a push button 32 for pressing the pressing portion 302 of the pressing member 30. The push button 32 is urged by a spring 34 in a direction opposite to a pressing direction of the pressing member 30.

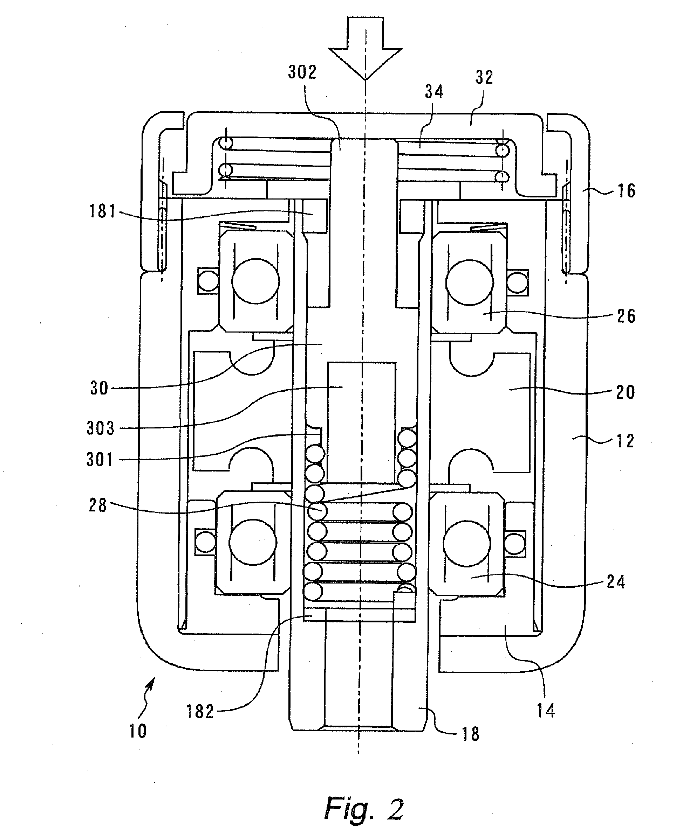

When the treatment tool is attached or detached to or from such a handpiece, the push button 32 is pressed. Fig. 2 is a sectional view showing the push button 32 being pressed in the medical/dental handpiece used in the first embodiment of the present invention. As shown in Fig. 2, when the push button 32 is pressed, the pressing member 30 is moved axially downward. This compresses the coil spring 28 by a predetermined amount, thereby increasing an inner diameter of the coil spring 28 by a predetermined amount. In the handpiece in this embodiment, the treatment tool is gripped using this characteristic. Specifically, a treatment tool grip portion of the coil spring 28 has a smaller coil inner diameter than an outer diameter of the treatment tool before being compressed, and has a larger coil inner diameter than that after being compressed. Thus, according to such a treatment tool gripping structure, the treatment tool can be firmly gripped with a simple structure.

### [Characteristic configuration of the first embodiment]

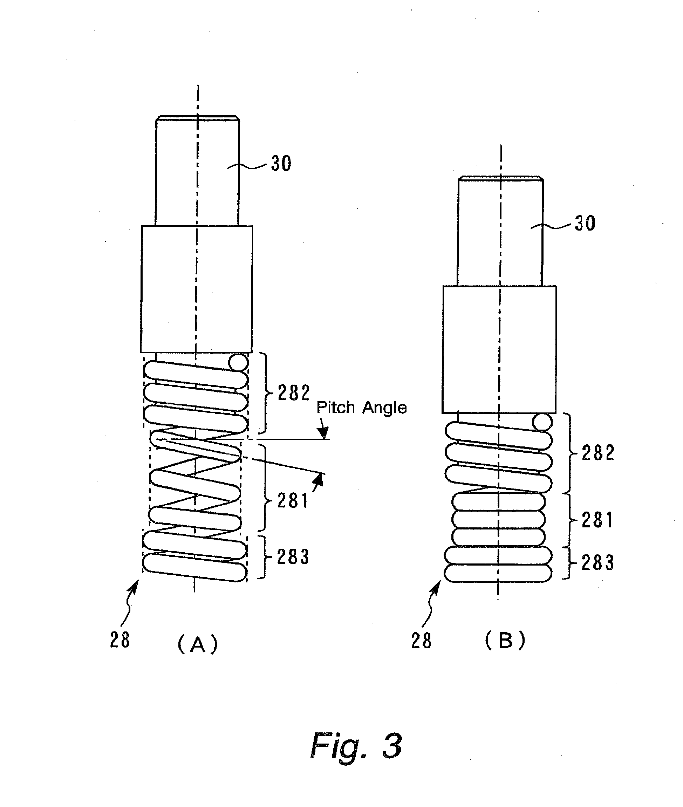

Next, with reference to Fig. 3, a characteristic configuration of this embodiment will be described in detail. As described above, the device for gripping the treatment tool of the handpiece of this embodiment has a structure in which the treatment tool is gripped by an inner diameter surface of the coil spring 28. According to such a grip structure, the treatment tool can be firmly gripped using an effective span configured in a spiral shape in small space in the spindle 18.

However, various treatment tools are used with the medical/dental handpiece depending on treatment areas and forms of treatment. Thus, various vibrations are created in the treatment tool during treatment, and transferred to the coil spring 28. If the vibrations resonate with natural vibration of the coil spring 28, a sudden increase in amplitude may increase vibration or reduce a gripping force.

Thus, a coil spring having an inconstant natural frequency is used in the handpiece in this embodiment. Fig. 3 illustrates a configuration of the coil spring 28 in the first embodiment in detail. Fig. 3(A) shows the coil spring 28 before being compressed, and Fig. 3(B) shows the coil spring 28 after being compressed.

As shown in Fig. 3, in the coil spring 28, a grip portion 281 located in the middle has a smaller coil diameter than that of an upper end 282 and a lower end 283. The grip portion 281 has a larger pitch angle than that of the upper end 282 and the lower end 283.

Using the coil spring 28 having such a configuration provides the advantage described below. Specifically, in the coil spring 28, the grip portion 281 has a coil inner diameter and a pitch angle different from those of the upper end 282 and the lower end 283. Thus, the coil spring 28 has a nonlinear spring constant and an inconstant natural frequency. This can effectively prevent resonance of the coil spring 28 caused by a specific frequency. This allows the treatment tool to be firmly gripped, and achieves a high vibration absorbing property. This allows a skilled user to properly operate the handpiece, and provides high safety and durability.

In the coil spring 28 described above, the grip portion 281 has a larger pitch angle than that of the upper end 282 and the lower end 283. Thus, when the push button 32 is pressed to compress the coil spring 28, the inner diameter of the grip portion 281 can be further increased. The pitch angle of the grip portion 281 is preferably as large as possible. This can maximize the inner diameter of the grip portion 281.

A winding direction of the coil spring 28 described above is set to a narrowing direction of the coil inner diameter during rotational driving. More specifically, in the handpiece in this embodiment, a left-handed coil spring 28 is used for a right-handed handpiece. This is particularly effective for an air turbine type handpiece with one rotational direction, thereby effectively increasing a gripping force of the treatment tool.

Also, predetermined pressure is applied to the coil spring 28 described above, and thus compression reduces the pitch angles of the upper end 282 and the lower end 283. Thus, when vibration input from the treatment tool during treatment is transferred to the coil spring 28, the upper end 282 and the lower end 283 tend to irregularly repeat contact and separation by the vibration. This can significantly change the natural frequency, and this vibration control prevents resonance and allows smooth treatment.

In the first embodiment described above, the coil spring 28 is used in which the grip portion 281 has an inner diameter different from that of the upper end 282 and the lower end 283, but the shape of the coil spring 28 is not limited to this. Specifically, for example, a conical coil spring may be used or a barrel-shaped coil spring having a coil inner diameter gradually increasing toward the middle may be used as a coil spring having an inconstant coil inner diameter for providing an inconstant natural frequency of the coil spring.

In the first embodiment described above, the coil spring 28 is used in which the grip portion 281 has a pitch angle different from that of the upper end 282 and the lower end 283, but the shape of the coil spring 28 is not limited to this. Specifically, a coil spring having a gradually changing pitch angle may be used or a coil spring having a pitch angle changing stepwise may be used as a coil spring having an inconstant pitch angle of the coil spring for providing an inconstant natural frequency of the coil spring.

In the first embodiment described above, the grip portion 281 of the coil spring 28 has about three turns, but the number of turns of the grip portion 281 is not limited to this. Specifically, the number of turns may be set that can ensure an amount of change of a predetermined coil inner diameter in relation to an effective span of the head portion 10.

In the first embodiment described above, the push button 32 is pressed to move the pressing member 30 in a compressing direction of the coil spring 28 to increase the inner diameter of the grip portion 281, but the method for increasing the inner diameter of the grip portion is not limited to this. Specifically, in addition to compression of the coil spring 28, a configuration of twisting the coil spring 28 in the direction opposite to the winding direction may be provided. This can further increase the inner diameter of the grip portion 281.

### Second Embodiment

### [Characteristic of the second embodiment]

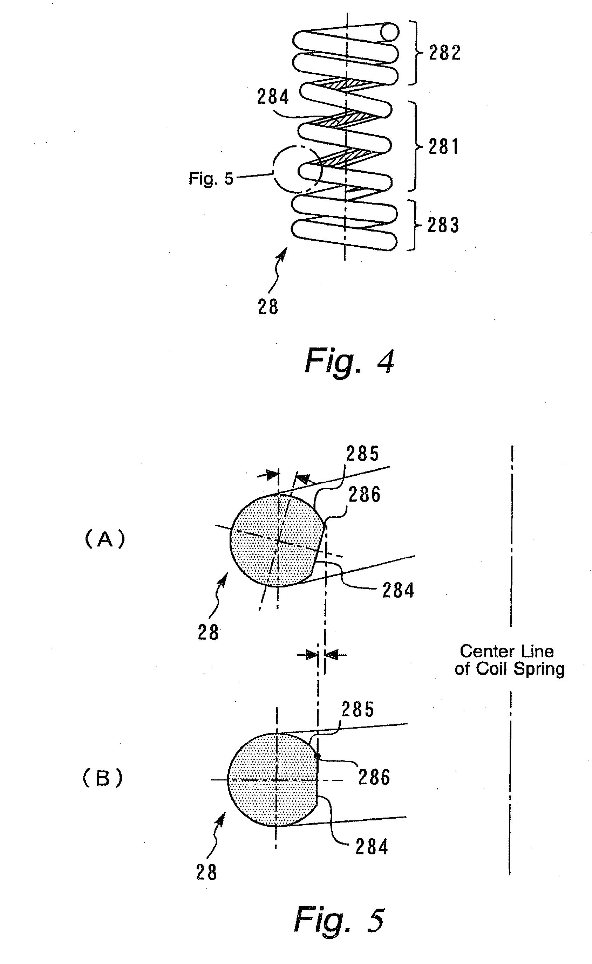

Next, with reference to Fig. 4 or 5, a second embodiment of the present invention will be described. For the device for gripping the treatment tool of the handpiece of the first embodiment described above, the treatment tools is attached or detached using the change in inner diameter when the coil spring 28 is compressed. In the first embodiment described above, the grip portion 281 has a large pitch angle to increase the amount of change in coil inner diameter to increase the gripping force.

However, the coil spring 28 is made of a highly elastic material, and has a drawback in coiling accuracy in terms of its property. This increases variations in coil inner diameter, which may cause variations in gripping performance of the treatment tool.

In the second embodiment, the coil spring 28 is further machined. Fig. 4 illustrates a structure of a coil spring 28 used in a device for gripping a treatment tool of the second embodiment. As shown in Fig. 4, in the coil spring 28, an inner diameter surface of a grip portion 281 is ground. Fig. 5 shows an axially cut section of a part of the grip portion 281 of the coil spring 28 surrounded by a circle in Fig. 4. Fig. 5(A) shows the coil spring without a push button 32 being pressed, and Fig. 5(B) shows the coil spring with the push button 32 being pressed.

As shown in Fig. 5, a ground surface 284 is formed by grinding a partial region of an inner diameter surface 285. More specifically, as shown in Fig. 5(B), the ground surface 284 is formed by grinding the inner diameter surface 285 of the coil spring 28 to a predetermined inner diameter with the push button 32 being pressed, that is, the coil spring 28 being compressed.

Such a coil spring 28 facilitates accuracy control of the coil inner diameter. Specifically, as described above, a highly elastic material for a coil spring causes wide variations in coil inner diameter in terms of its property. Thus, as the coil spring 28 in this embodiment, the coil inner diameter is ground to the predetermined coil inner diameter with the coil spring 28 being compressed, thereby effectively increasing accuracy of the coil inner diameter in insertion of the treatment tool, and further making the coil spring 28 more flexible.

When the pressing of the push button 32 is released and an amount of compression of the coil spring 28 is changed, a wire of the coil spring 28 is twisted. At this time, as shown in Fig. 5(A), an edge 286 of the ground surface 284 is twisted and overhangs toward the center of the coil. Thus, the device for gripping the treatment tool of this embodiment allows an outside of the inserted treatment tool to be firmly gripped by the edge 286.

Further, in the state shown in Fig. 5(B), the edge 286 of the ground surface 284 is retracted in the direction opposite to the center of the coil, thereby further increasing the coil inner diameter. This can effectively increase an amount of increase in coil inner diameter in attachment and detachment of the treatment tool as compared to a case of using the coil spring 28 without the ground surface 284.

### Description of Reference Characters

10 head portion
12 head housing
14 cartridge
16 head cap
18 spindle
181 rear end set screw
182 step
20 rotary vane
24,26 Ball bearings
28 coil spring
281 grip portion
282 upper end
283 lower end
284 ground surface
285 inner diameter surface
286 edge
30 pressing member
301 securing portion
302 pressing portion
303 insertion portion
32 push button
34 spring

## Claims

1. A device for gripping a treatment tool of a handpiece, the device comprising: a rotatable spindle (18) and a coil spring (28) that is set in the spindle (18) and rotatable integrally with the spindle (18), the coil spring being compressed between a pressing member (30) and a step (182) in the spindle (18), the treatment tool insertable from a tip of the spindle (18) into the coil spring (28) being gripped by an inner diameter surface (285) of a grip portion (281) of the coil spring (28), wherein:
the coil spring (28) has an inconstant natural frequency, and
wherein the coil spring (28) includes the grip portion (281) in a partial region thereof, and the grip portion (281) has a smaller inner diameter than that of other regions (282, 283), and
wherein the device further comprises a compression mechanism that includes the pressing member (30) installed between a rear end of the spindle (18) and the coil spring (28), the compression mechanism being operable to press the pressing member (30) from the rear end of the spindle (18) to axially compress the coil spring (28), and
wherein the inner diameter of the coil spring is increased when the coil spring is compressed.

2. The device for gripping a treatment tool of a handpiece according to claim 1, wherein the coil spring (28) includes the grip portion (281) in a middle region thereof.

3. The device for gripping a treatment tool of a handpiece according to claim 1 or 2, wherein the coil spring (28) has an inconstant pitch angle.

4. The device for gripping a treatment tool of a handpiece according to any one of claims 1 to 3,
wherein the handpiece is a medical or dental handpiece and wherein the inner diameter of the grip portion (281) is configured to be smaller than an outer diameter of the associated insertable treatment tool when the compression mechanism is not operated, and is configured to be larger than the outer diameter of the associated insertable treatment tool when the compression mechanism is operated.

5. The device for gripping a treatment tool of a handpiece according to claim 4, wherein an inner diameter portion (285) of the grip portion (281) has a ground surface (284) along an outer surface of the treatment tool when the compression mechanism is operated.

6. The device for gripping a treatment tool of a handpiece according to claim 4 or 5, wherein the coil spring (28) includes the grip portion (281) in a partial region thereof, and the grip portion (281) has a larger pitch angle than that of other regions (282, 283).

## Patentansprüche

1. Einrichtung zum Greifen eines Behandlungswerkzeugs eines Handstücks, die Einrichtung mit: einer drehbaren Spindel (18) und einer Spiralfeder (28), welche in die Spindel (18) eingepasst ist und die einstückig mit der Spindel (18) drehbar ist, wobei die Spiralfeder zwischen einem Drückelement (30) und einer Stufe (182) in der Spindel (18) komprimiert wird, wobei das Behandlungswerkzeug von einer Spitze der Spindel (18) in die Spiralfeder (28) einführbar ist, wobei es durch eine innere Durchmesseroberfläche (285) eines Greifabschnitts (281) der Spiralfeder (28) ergriffen wird, wobei:
die Spiralfeder (28) eine natürliche Frequenz hat, die nicht konstant ist, und
wobei die Spiralfeder (48) den Greifabschnitt (281) in einem partiellen Bereich von dieser aufweist und wobei der Greifabschnitt (281) einen kleineren inneren Durchmesser hat als derjenige von anderen Bereichen (282, 283) und
wobei die Einrichtung ferner einen Kompressionsmechanismus aufweist, der das Drückelement (30), welches zwischen einem hinteren Ende der Spindel (18) und der Spiralfeder (28) eingebaut ist, aufweist, wobei der Kompressionsmechanismus betätigbar ist, um das Drückelement (30) von dem hinteren Ende der Spindel (18) zu drücken, um die Spiralfeder (28) axial zu komprimieren, und
wobei der innere Durchmesser der Spiralfeder sich erhöht, wenn die Spiralfeder komprimiert wird.

2. Einrichtung zum Greifen eines Behandlungswerkzeugs eines Handstücks nach Anspruch 1, bei der die Spiralfeder (28) den Greifabschnitt (281) in einem mittleren Bereich von diesem aufweist.

3. Einrichtung zum Greifen eines Behandlungswerkzeugs eines Handstücks nach Anspruch 1 oder 2, bei der die Spiralfeder (28) einen Steigungswinkel hat, der nicht konstant ist.

4. Einrichtung zum Greifen eines Behandlungswerkzeugs eines Handstücks nach einem der Ansprüche 1-3,
bei der das Handstück ein medizinisches oder zahnmedizinisches Handstück ist und wobei der innere Durchmesser des Greifabschnitts (281) dazu ausgestaltet ist, dass er kleiner ist als ein äußerer Durchmesser des zugeordneten einführbaren Behandlungswerkzeugs, wenn der Kompressionsmechanismus nicht betätigt wird, und er dazu ausgestaltet ist, größer als der äußere Durchmesser des zugeordneten einführbaren Behandlungswerkzeugs zu sein, wenn der Kompressionsmechanismus betätigt wird.

5. Einrichtung zum Greifen eines Behandlungswerkzeugs eines Handstücks nach Anspruch 4, bei der ein innerer Durchmesserabschnitt (285) des Greifabschnitts (281) eine geschliffene Oberfläche (284) entlang einer äußeren Oberfläche des Behandlungswerkzeugs hat, wenn der Kompressionsmechanismus betätigt wird.

6. Einrichtung zum Greifen eines Behandlungswerkzeugs eines Handstücks nach Anspruch 4 oder 5, bei der die Spiralfeder (28) den Greifabschnitt (281) in einem partiellen Bereich von dieser aufweist und wobei der Greifabschnitt (281) einen größeren Neigungswinkel als derjenige von anderen Bereichen (282, 283) hat.

## Revendications

1. Dispositif de préhension d'un outil de traitement d'une pièce à main, le dispositif comprenant : une tige (18) rotative et un ressort hélicoïdal (28) qui est fixé dans la tige (18) et pouvant tourner d'un seul tenant avec la tige (18), le ressort hélicoïdal étant comprimé entre un élément de pression (30) et un palier (182) dans la tige (18), l'outil de traitement pouvant être inséré à partir d'un bout de la tige (18) dans le ressort hélicoïdal (28) étant saisi par une surface de diamètre intérieur (285) d'une partie de préhension (281) du ressort hélicoïdal (28), dans lequel :
le ressort hélicoïdal (28) a une fréquence propre inconstante, et
dans lequel le ressort hélicoïdal (28) comporte la partie de préhension (281) dans une région partielle de celui-ci, et la partie de préhension (281) a un diamètre intérieur inférieur à celui des autres régions (282, 283), et
dans lequel le dispositif comprend en outre un mécanisme de compression qui comporte l'élément de pression (30) installé entre une extrémité arrière de la tige (18) et le ressort hélicoïdal (28), le mécanisme de compression est actionné pour presser l'élément de pression (30) à partir de l'extrémité arrière de la tige (18) pour comprimer le ressort hélicoïdal (28) axialement, et
dans lequel le diamètre intérieur du ressort hélicoïdal augmente lorsque le ressort hélicoïdal est comprimé.

2. Dispositif de préhension d'un outil de traitement d'une pièce à main selon la revendication 1, dans lequel le ressort hélicoïdal (28) comporte la partie de préhension (281) dans une région médiane de celui-ci.

3. Dispositif de préhension d'un outil de traitement d'une pièce à main selon la revendication 1 ou 2, dans lequel le ressort hélicoïdal (28) a un angle de pas inconstant.

4. Dispositif de préhension d'un outil de traitement d'une pièce à main selon l'une quelconque des revendications 1 à 3,
dans lequel la pièce à main est une pièce à main médicale ou dentaire et dans lequel le diamètre intérieur de la partie de préhension (281) est configuré pour être inférieur à un diamètre extérieur de l'outil de traitement pouvant être inséré associé lorsque le mécanisme de compression n'est pas actionné, et est configuré pour être supérieur au diamètre extérieur de l'outil de traitement pouvant être inséré associé lorsque le mécanisme de compression est actionné.

5. Dispositif de préhension d'un outil de traitement d'une pièce à main selon la revendication 4, dans lequel une partie de diamètre intérieur (285) de la partie de préhension (281) a une surface de sol (284) le long d'une surface extérieure de l'outil de traitement lorsque le mécanisme de compression est actionné.

6. Dispositif de préhension d'un outil de traitement d'une pièce à main selon la revendication 4 ou 5, dans lequel le ressort hélicoïdal (28) comporte la partie de préhension (281) dans une région partielle de celui-ci, et la partie de préhension (281) a un angle de pas supérieur à celui des autres régions (282, 283).
